# FASCICULE DE BREVET EUROPEEN

(11) **EP 0 958 059 B1**
(45) Date de publication et mention de la délivrance du brevet: **19.03.2003**
(21) Numéro de dépôt: 97937648.0
(22) Date de dépôt: 21.08.1997
(51) Int. Cl.: B02C 18/24, H02P 7/68

(54) **INSTALLATION DE PRE-BROYAGE**
VOR-BRECHANLAGE
COARSE CRUSHING PLANT

(30) Priorité: 22.08.1996 FR 9610355
(43) Date de publication de la demande: 24.11.1999
(73) Titulaire: COMPAGNIE FRANCAISE DES FERRAILLES, F-75012 Paris (FR)
(72) Inventeur: HUCLIEZ, Philip, F-44980 Saint Luce sur Loire (FR); DEL VECCHIO, Jean-Marie, F-94420 Le Plessis Trévise (FR)
(74) Mandataire: Dronne, Guy
(86) Numéro de dépôt international: FR9701512
(87) Numéro de publication internationale: WO98007519

(56) Documents cités:
- EP-A- 0 182 749
- DE-A- 3 907 813
- FR-A- 2 697 174
- GB-A- 1 569 375
- W. LEONHARD: "control of electrical drives (chapt. 5.3.3 combined armature and field control)" 1990 , SPRINGER-VERLAG , BERLIN HEIDELBERG XP000196971 voir page 50 - page 52

## Description

La présente invention a pour objet une installation de pré-broyage d'objets et notamment, mais non exclusivement, d'épaves de véhicules automobiles ou autres types d'épaves.

On sait que pour la récupération de matériaux notamment métalliques à partir notamment d'épaves de véhicules automobiles, ou autres, on utilise des installations de broyage.

Le fonctionnement d'une unité de broyage est soumis à divers risques tels que des explosions, incendies, bris de machines etc.. Ces incidents sont principalement provoqués par l'introduction dans le broyeur, parmi les épaves, de corps creux tels que des réservoirs, des bouteilles de gaz, des cuves contenant du G.P.L ou des pièces massives.

La rentabilité du transport d'épaves automobiles a conduit les professionnels du recyclage à compresser initialement les épaves. Les paquets ainsi obtenus présentent plusieurs inconvénients pour le traitement effectué par broyage. D'une part, les paquets sont difficilement absorbés par un broyeur compte tenu de sa densité et de sa dureté. D'autre part, ces paquets peuvent renfermer des corps creux qui risquent de provoquer des explosions au moment du broyage. Le risque d'explosion est également présent avec le traitement d'épaves automobiles non compressées, par exemple il peut y avoir présence de carburant dans les réservoirs.

Pour résoudre ce problème on a proposé d'utiliser des pré-broyeurs qui sont destinés à préparer ces paquets ou épaves non compressés avant le broyage par un pré-déchiquetage. Cette opération augmente considérablement la productivité des broyeurs et supprime les risques d'explosion.

Le principe des pré-broyeurs consiste à faire passer entre deux arbres munis de crocs de déchiquetage et tournant à des vitesses différentes les matériaux à pré-déchiqueter.

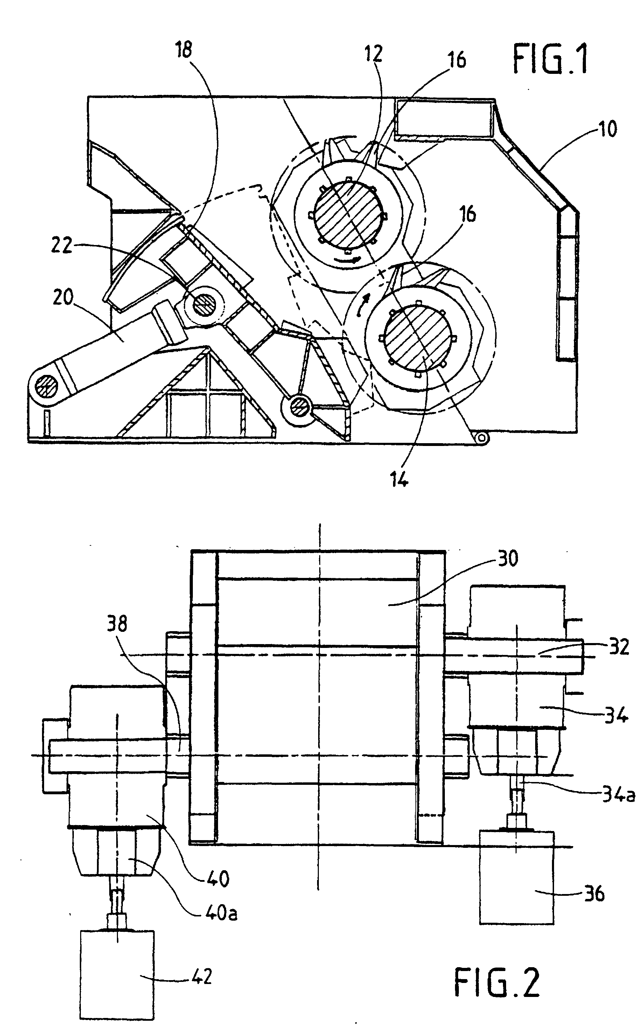

La figure 1 annexée illustre schématiquement un tel pré-broyeur de type connu. A l'intérieur d'une enceinte 10 on trouve deux arbres horizontaux parallèles entre eux 12 et 14 qui sont munis sur leurs périphéries de crocs de déchiquetage tels que 16. On trouve un arbre inférieur 14 servant essentiellement à entraîner les objets ou produits à pré-broyer et un arbre supérieur 12 qui, en combinaison avec la rotation de l'arbre 14, permet effectivement d'obtenir le pré-broyage, les deux arbres tournant dans des sens opposés et ayant des vitesses différentes. Les matériaux ou objets à pré-broyer sont amenés à l'aide d'une plate-forme 18 montée à l'extrémité d'un vérin 20, la plate-forme étant montée pivotante par rapport au vérin 20 autour de l'axe 22.

Dans les installations de pré-broyage connues, l'entraînement en rotation des arbres 12 et 14 est réalisé à l'aide d'un seul moteur hydraulique qui est commandé par une centrale hydraulique. Le moteur hydraulique entraîne un des deux arbres, un système d'engrenage permettant l'entraînement de l'autre arbre. Ces systèmes d'entraînement impliquent une grande rigidité dans le fonctionnement du pré-broyeur en imposant un rapport de vitesse entre les deux arbres qui est constant. Typiquement, les machines de pré-broyage actuellement en exploitation permettent au mieux le traitement de 45 tonnes de matière par heure.

Un objet de la présente invention est de foumir une installation de pré-broyage qui permette d'obtenir une efficacité plus grande, une augmentation de la sécurité et une meilleure adaptabilité à la nature des matériaux à pré-broyer.

Pour atteindre ce but, selon l'invention, l'installation de pré-broyage d'objets comprenant un premier arbre d'entraînement des objets et un deuxième arbre de déchiquetage des objets entraînés, lesdits deux arbres étant munis de crocs de déchiquetage et des moyens moteur d'entraînement en rotation des deux arbres, se caractérise en ce que les moyens moteur d'entraînement en rotation comprennent :
- un premier moteur couplé au premier arbre par un premier ensemble réducteur et des premiers moyens de commande dudit premier moteur,
- un deuxième moteur distinct du premier couplé au deuxième arbre par un deuxième ensemble réducteur et des deuxièmes moyens de commande dudit deuxième moteur distincts des premiers moyens de commande, et
- des moyens de contrôle de l'installation comprenant des moyens pour recevoir des instructions de pilotage de l'installation, des moyens capteurs pour délivrer des informations représentatives du fonctionnement effectif de l'installation, et des moyens pour transmettre à chaque moyen de commande de moteur des instructions de commande en réponse aux instructions de pilotage et aux informations délivrées par lesdits capteurs.

On comprend que grâce aux caractéristiques spécifiques des moyens d'entraînement des deux arbres et en particulier du fait que chaque arbre étant entraîné par un moteur indépendant, il est possible d'adapter la vitesse relative de rotation des deux arbres à la nature des matériaux à pré-broyer et d'adapter les vitesses absolues également à la nature de ces matériaux et au débit de matériau à traiter. En outre, selon l'invention, le dispositif de contrôle comporte des moyens pour contrôler en permanence le fonctionnement de l'installation et adapter les paramètres de fonctionnement aux conditions d'utilisation, ce qui améliore le rendement de l'installation et augmente la sécurité.

Selon un mode préféré de mise en oeuvre, chacun des deux moteurs est un moteur à courant continu de préférence du type à excitation plein flux.

En contrôlant la tension d'induit du moteur, on peut contrôler la vitesse de rotation et en contrôlant le courant d'induit, on peut contrôler le couple du moteur et donc de l'arbre entraîné.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées sur lesquelles :
- la figure 1 déjà décrite représente le principe d'une installation de pré-broyage;
- la figure 2 est une vue de dessus d'une installation de pré-broyage conforme à l'invention; et
- la figure 3 est une vue schématique montrant l'ensemble des moyens de régulation et de commande.

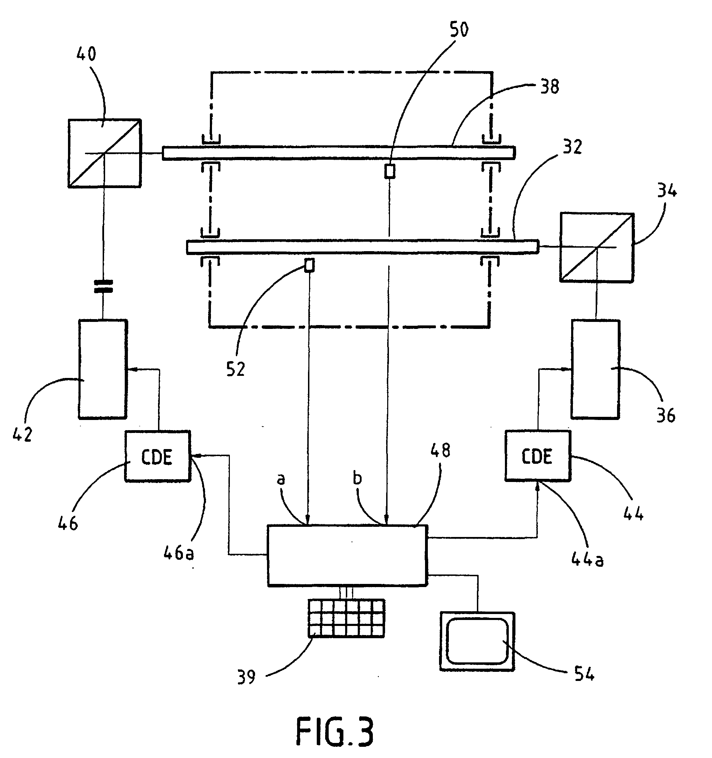

En se référant aux figures 2 et 3 on va décrire un mode préféré de réalisation de l'installation de pré-broyage.

Sur la figure 2, on a représenté en vue de dessus le caisson 30 de l'installation de pré-broyage dans lequel sont montés les deux arbres avec leurs crocs de déchiquetage. On a représenté également la sortie du premier arbre 32 ou arbre de déchiquetage qui est couplé à un réducteur mécanique 34 constituant en même temps, dans le mode de réalisation considéré, un renvoi d'angle. L'entrée 34a du réducteur 34 est couplée mécaniquement à un premier moteur 36. De préférence, le premier moteur 36 est un moteur électrique dont on exposera ultérieurement les caractéristiques. Sur la figure 2 on a également représenté la sortie 38 du deuxième arbre ou arbre d'entraînement qui est couplé à un deuxième réducteur 40. L'entrée 40a du réducteur 40 est couplée à un deuxième moteur 42 indépendant du premier moteur 36. De préférence, le deuxième moteur 42 est également un moteur électrique.

En se référant maintenant au schéma de la figure 3, on va décrire l'ensemble des circuits de commande de la mise en rotation des arbres 32 et 38. Chaque moteur 36 et 42 est associé à un circuit électrique ou électronique de commande séparé respectivement référencé 44 et 46, chaque circuit de commande comprend en particulier un variateur de tension. Ces circuits 44 et 46 reçoivent sur leurs entrées respectives des signaux de commande émis par un circuit de contrôle ou de pilotage de l'ensemble de l'installation de pré-broyage. Ce circuit de pilotage est référencé 48 sur la figure 3. En outre, à l'intérieur du caisson 30 sont prévus des capteurs tels que 50 et 52 qui convertissent en signaux électriques les informations notamment de couple et de vitesse de rotation de chacun des arbres 32 et 38. Les sorties des capteurs 50 et 52 sont reliées à des entrées a) et b) du circuit de contrôle 48. Le circuit de contrôle 48 peut recevoir également sur son entrée c) des instructions de pilotage de l'installation entrées à l'aide du clavier 49 qui sont notamment relatives à la charge qui va être entrée dans le pré-broyeur ainsi qu'à la nature des matériaux à pré-broyer. De préférence également, le circuit de contrôle 48 est associé à des panneaux d'affichage 54 qui permettent au responsable de l'installation de suivre en permanence le fonctionnement de l'installation de pré-broyage et de détecter les éventuels problèmes de fonctionnement.

De préférence, les moteurs d'entraînement 36 et 42 sont des moteurs à courant continu avec une excitation plein flux. Dans de tels moteurs la tension d'induit représente la vitesse de rotation de l'arbre associé au moteur et le courant d'induit le couple. A titre d'exemple, avec le moteur couplé à l'arbre d'entraînement le courant du variateur servant à commander le moteur est limité à 370 ampères ce qui permet d'obtenir un couple de 450 000 Nm. Pour un tel moteur de puissance 120 kW, la vitesse maximale de rotation de l'arbre entraîné ne peut être que de 2,7 tours par minute pour un fonctionnement à couple constant. Pour obtenir une vitesse supérieure à 2,7 tours par minute, dans le cas particulier de ce moteur, et garder la même puissance, on utilise le principe de réduction de flux qui consiste à diminuer la tension d'excitation ce qui permet d'augmenter la vitesse mais en même temps diminue le couple.

Ainsi le circuit de commande a entre autres pour fonction lorsque la vitesse imposée est inférieure à 2,7 tours par minute, de commander le variateur pour garder le moteur en excitation plein flux et de réduire le flux d'une façon proportionnelle à la vitesse au-delà de 2,7 tours par minute jusqu'à 4 tours par minute.

En ce qui conceme l'arbre rapide, c'est-à-dire l'arbre de déchiquetage, le variateur associé à ce moteur est limité à 1 400 ampères ce qui permet d'obtenir un couple de 415 000 Nm. Pour un moteur de 420 kW de puissance la vitesse maximale ne peut être que de 12 tours par minute pour un fonctionnement à couple constant. Si on souhaite obtenir une vitesse supérieure à 12 tours par minute et garder la même puissance, on utilise, comme on l'a déjà expliqué, la réduction de flux. Ainsi, tant que la vitesse programmée dans le circuit 48 est inférieure à 12 tours par minute, l'action du circuit de commande conjugué au variateur consiste à garder le moteur en excitation plein flux. En revanche, lorsque la vitesse doit être comprise entre 12 et 17 tours par minute, le variateur du circuit de commande sert à réduire le flux d'une manière proportionnelle.

Le circuit de contrôle 48 sert non seulement à transmettre au circuit de commande, y compris aux variateurs associés, de chaque moteur les paramètres de fonctionnement en fonction de la vitesse et du couple souhaité mais également à contrôler le synchronisme du fonctionnement des deux moteurs, c'est-à-dire des deux arbres. En effet, l'arbre rapide ne doit en aucun cas avoir une vitesse proche de celle de l'arbre lent puisque dans ce cas on n'aurait aucun résultat de déchiquetage. En conséquence, le circuit de contrôle 48 vérifie que la vitesse de l'arbre rapide ne passe pas en-dessous d'une valeur qui peut être définie par trois fois la vitesse lente. Si la vitesse de l'arbre rapide passe en-dessous de trois fois la vitesse de l'arbre lent, le circuit 48 va émettre un signal vers le circuit de commande du moteur associé à l'arbre lent pour modifier la consigne de vitesse de cet arbre.

Il va de soi que l'ensemble des fonctions mises en oeuvre par le circuit de contrôle 48 sont mises en oeuvre par des moyens informatiques par exemple à l'aide d'un microprocesseur qui exécute différents programmes correspondant aux différentes fonctions de commande et de contrôle.

## Revendications

1. Installation de pré-broyage d'objets comprenant un premier arbre d'entraînement des objets et un deuxième arbre de déchiquetage des objets entraînés, les deux arbres étant munis de crocs de déchiquetage et des moyens moteur d'entraînement en rotation des deux arbres, **caractérisée en ce que** les moyens moteur d'entraînement en rotation comprennent :
- un premier moteur à courant continu couplé au premier arbre par un premier ensemble réducteur pour entraîner ledit premier arbre à une première vitesse de rotation et des premiers moyens de commande dudit moteur;
- un deuxième moteur à courant continu distinct du premier couplé au deuxième arbre par un deuxième ensemble réducteur pour entraîner le deuxième arbre à une deuxième vitesse supérieure à la première vitesse, et des deuxièmes moyens de commande dudit deuxième moteur, distincts des premiers moyens de commande, et des moyens de contrôle de l'installation comprenant des moyens pour recevoir des instructions de pilotage de l'installation, des moyens capteurs pour délivrer des informations représentatives de la vitesse de rotation et du couple de chacun des arbres, et du fonctionnement effectif de l'installation et des moyens pour transmettre à chaque moyen de commande des moteurs des instructions de commande en réponse aux instructions de pilotage et aux informations délivrées par lesdits capteurs.

2. Installation de pré-broyage selon la revendication 1, **caractérisée en ce que** les moteurs électriques sont des moteurs à courant continu avec excitation plein flux.

3. Installation selon la revendication 2, **caractérisée en ce que** chacun desdits moyens de commande comprend un variateur de flux apte à faire varier le flux du moteur qu'il commande.

4. Installation selon l'une quelconque des revendications 1 à 3, **caractérisée en ce que** les moyens de contrôle de l'installation comprennent des moyens pour contrôler que la vitesse dudit premier arbre est de l'ordre du tiers de la vitesse dudit deuxième arbre et des moyens pour modifier la vitesse dudit premier arbre si la vitesse dudit deuxième arbre devient inférieure à trois fois celle du premier arbre.

## Patentansprüche

1. Vorbrechanlage für Gegenstände mit einer ersten Welle zum Antrieb der Gegenstände und einer zweiten Welle zur Zerstückelung der angetriebenen Gegenstände, wobei die beiden Wellen mit Zähnen versehen sind und mit motorischen Antriebsmitteln zur Rotation der beiden Wellen, **dadurch gekennzeichnet, dass** die motorischen Antriebsmittel zur Rotation folgende Merkmale aufweisen:
- einen ersten Gleichstrommotor, der an die erste Welle über eine erste Untersetzungsgetriebeanordnung gekoppelt ist, um die erste Welle mit einer ersten Rotationsgeschwindigkeit anzutreiben und ersten Steuermitteln für diesen Motor;
- einen zweiten, von dem ersten verschiedenen Gleichstrommotor, der an die zweite Welle über eine zweite Untersetzungsgetriebeanordnung gekoppelt ist, um die zweite Welle mit einer zweiten Rotationsgeschwindigkeit anzutreiben, die größer als die erste Rotationsgeschwindigkeit ist und sich von den ersten unterscheidenden zweiten Steuermittel für diesen zweiten Motor sowie Überwachungsmittel für die Anlage, die Mittel zum Empfang von Regelbefehlen für die Anlage aufweisen und Sensoreinrichtungen, die repräsentative Informationen über die Rotationsgeschwindigkeit, das Drehmoment jeder der Wellen und das wirksame Funktionieren der Anlage liefern und Mittel, die als Antwort auf Regelbefehle und die durch die Sensoren gelieferten Informationen Steuerbefehle an jedes Steuermittel eines Motors übertragen.

2. Vorbrechanlage nach Anspruch 1, **dadurch gekennzeichnet, dass** die Elektromotoren Gleichstrommotoren mit Vollflusserregung sind.

3. Vorbrechanlage nach Anspruch 2, **dadurch gekennzeichnet, dass** jedes der Steuermittel einen Flussregler aufweist, der in der Lage ist, den Fluss desjenigen Motors, den er steuert, zu verändern.

4. Vorbrechanlage nach einem der Ansprüche 1 bis 3, **dadurch gekennzeichnet, dass** die Überwachungsmittel für die Anlage zum einen Mittel zur Überwachung des Umstands, dass sich die Geschwindigkeit der ersten Welle in der Größenordnung eines Drittels der Geschwindigkeit der zweiten Welle befindet und zum anderen Mittel zur Veränderung der Geschwindigkeit der ersten Welle, sofern die Geschwindigkeit der zweiten Welle weniger als das Dreifache der Geschwindigkeit der ersten Welle beträgt, aufweist.

## Claims

1. Plant for the coarse crushing of objects, comprising a first shaft for driving the objects and a second shaft for shredding the driven objects, the two shafts being fitted with shredding teeth and with motor means for driving the rotation of the two shafts, the plant being **characterized in that** the rotational-drive motor means comprise:
- a first DC motor coupled to the first shaft by a first reduction gearset to drive the said first shaft at a first rotational speed and first means of controlling the said motor;
- a second DC motor distinct from the first and coupled to the second shaft by a second reduction gearset for driving the second shaft at a second speed higher than the first speed, and second means for controlling the said second motor, these means being distinct from the first control means, and means of monitoring the plant comprising means for receiving instructions for driving the plant, sensor means for delivering information representative of the rotational speed and of the torque of each of the shafts, and of the actual operation of the plant and means for transmitting to each motor control means control instructions in response to the driving instructions and the information delivered by the said sensors.

2. Coarse crushing plant according to Claim 1, **characterized in that** the electric motors are full flux field DC motors.

3. Plant according to Claim 2, **characterized in that** each of the said control means comprises a flux regulator able to vary the flux of the motor it controls.

4. Plant according to any one of Claims 1 to 3, **characterized in that** the means of monitoring the plant comprise means of checking that the speed of the said first shaft is of the order of one third of the speed of the said second shaft and means for altering the speed of the said first shaft if the speed of the said second shaft drops below three times that of the first shaft.
